# EUROPÄISCHE PATENTSCHRIFT

(11) **EP 1 417 744 B1**
(45) Veröffentlichungstag und Bekanntmachung des Hinweises auf die Patenterteilung: **12.10.2005**
(21) Anmeldenummer: 03708056.1
(22) Anmeldetag: 14.01.2003
(51) Int. Cl.: H02K 29/08, H02K 5/173, G01D 5/16

(54) **ELEKTRONISCH KOMMUTIERTER INNENLÄUFERMOTOR**
ELECTRONICALLY COMMUTATED INTERNAL ROTOR MOTOR
MOTEUR A ROTOR INTERNE A COMMUTATION ELECTRONIQUE

(30) Priorität: 18.02.2002 DE 20202523 U
(43) Veröffentlichungstag der Anmeldung: 12.05.2004
(73) Patentinhaber: ebm-papst St. Georgen GmbH & Co. KG, 78112 St. Georgen (DE)
(72) Erfinder: DOEMEN, Benno, 78112 St. Georgen (DE); NICKEL-JETTER, Matthias, 78056 Villingen-Schwenningen (DE)
(74) Vertreter: Raible, Tobias
(86) Internationale Anmeldenummer: PCT/EP2003/000249
(87) Internationale Veröffentlichungsnummer: WO 2003/069765

(56) Entgegenhaltungen:
- DE-A- 1 575 609
- FR-A- 2 497 571
- FR-A- 2 646 028
- JP-A- 4 033 538
- US-A- 3 082 338
- US-A- 4 875 785
- US-A- 4 978 234
- US-A- 4 982 125
- US-A- 5 811 902
- US-A- 6 011 388

## Beschreibung

Die Erfindung betrifft einen elektronisch kommutierten Innenläufermotor. Derartige Motoren haben ein niedriges axiales Trägheitsmoment (GD2) und werden vor allem dort verwendet, wo eine hohe Drehbeschleunigung des Rotors verlangt wird.

Es ist eine Aufgabe der Erfindung, einen neuen elektronisch kommutierten Innenläufermotor bereitzustellen.

Nach der Erfindung wird diese Aufgabe gelöst durch den Gegenstand des Anspruchs 1. Hierdurch ergibt sich ein robuster Motor, der auch bei hohen Drehbeschleunigungen einen ruhigen Lauf von Motor und zugehörigem Getriebe ermöglicht und sich besonders für Antriebe mit hohen Drehzahlen eignet, bei denen im Betrieb Belastungen durch Stöße und dergleichen vorkommen können.

Eine bevorzugte Weiterbildung der Erfindung ist Gegenstand des Anspruchs 2. Hierdurch wird es möglich, einen Steuermagneten so anzuordnen, dass sein Magnetfeld durch das Formstück und die Senkkopfschraube nicht oder nur wenig in ungünstiger Weise beeinflusst wird, so dass eine exakte Kommutierung der Ströme im Motor mittels eines solchen Steuermagneten ermöglicht wird.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: einen Längsschnitt durch eine bevorzugte Ausführungsform eines Motors nach der Erfindung, und
- Fig. 2: eine vergrößerte Darstellung eines Ausschnitts aus Fig. 1, in auseinandergezogener Darstellungsweise.

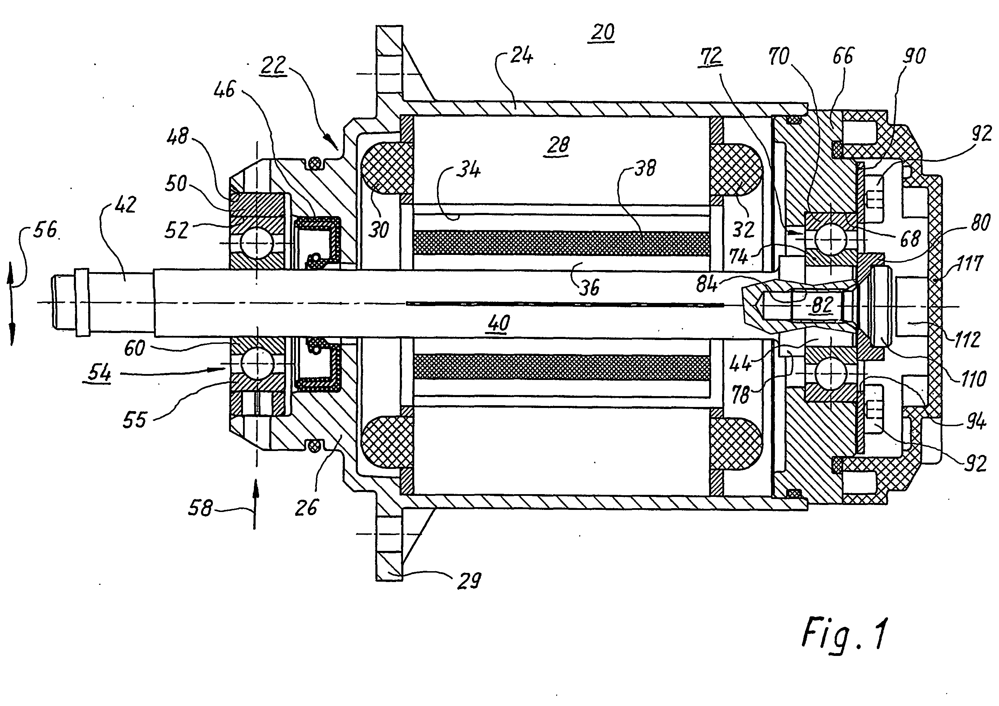

Fig. 1 zeigt einen elektronisch kommutierten Innenläufermotor 20 mit einem Gehäuse 22, das ein zylindrisches Gehäuseteil 24, ein A-Lagerschild 26, und einen Befestigungsflansch 29 aufweist.

Im zylindrischen Gehäuseteil 24 ist das Blechpaket eines Außenstators 28 angeordnet, dessen Wickelköpfe bei 30 und 32 angedeutet sind. Der Stator 28 hat eine Innenausnehmung 34, in der ein Rotor 36 mit Permanentmagneten 38 auf einer Welle 40 angeordnet ist, deren Abtriebsende mit 42 und deren inneres Wellenende mit 44 bezeichnet ist. Ein solcher Motor kann auch als permanent erregte Synchron-Innenläufermaschine bezeichnet werden.

Im A-Lagerschild 26 ist in üblicher Weise eine Dichtung 46 für die Welle 40 vorgesehen. Ferner befindet sich dort eine Ausnehmung 48, in der ein Führungsring 50 befestigt ist, der in einer langlochartigen Ausnehmung den Außenring 55 eines Wälzlagers 54 radial geringfügig verschiebbar führt. Diese radiale Verschiebbarkeit ist bei 56 angedeutet. Hierfür wird der Außenring 55 in Richtung eines Pfeiles 58 von einer nicht dargestellten Feder radial beaufschlagt. Die radiale Beweglichkeit beträgt gewöhnlich einen Bruchteil eines Millimeters, z.B. 0,4 mm, und dient bevorzugt dazu, das Spiel in einem von der Welle 40 angetriebenen Schneckentrieb möglichst klein zu halten. Gerade bei hohen Drehzahlen über 10.000 U/min, einem bevorzugten Anwendungsgebiet eines solchen Motors, ist die Geräuschminderung in einem vom Motor angetriebenen Getriebe sehr wichtig. Der Innenring 60 des Wälzlagers 54 ist auf die Welle 40 aufgepresst.

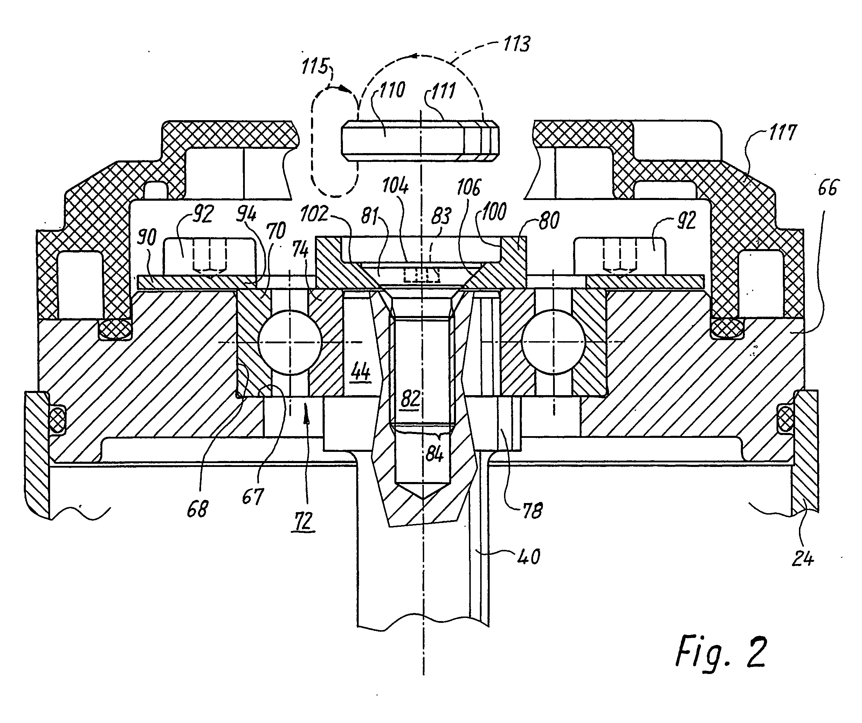

Im offenen Ende des zylindrischen Gehäuseteils 24 ist ein B-Lagerschild 66 befestigt. Dieses hat eine mit einer Ringschulter 67 (Fig. 2) versehene Ausnehmung 68 für den Außenring 70 eines Wälzlagers 72, das eine geringfügige kardanische Beweglichkeit des rechten, inneren Wellenende 44 gestattet und dessen Innenring 74 auf diesem Ende 44 befestigt ist. Hierzu hat die Welle 40 einen Ringbund 78, mit dessen rechter Schulter sie gegen die linke Seite des Innenrings 74 anliegt. Gegen seine rechte Seite liegt ein Formstück 80 an, das durch den Senkkopf 81 einer Senkkopfschraube 82 in Richtung zur Welle 40 gepresst wird und das etwa ringförmig ausgebildet ist. Die Schraube 82 ist in ein Innengewinde 84 im Wellenende 44 eingeschraubt und presst dadurch das Formstück 80 in Richtung zum Wellenende 44.

Zum sicheren Einspannen des Außenrings 70 dient ein flaches, ringförmiges Teil 90, das durch eine Mehrzahl von Schrauben 92, bevorzugt drei gleichmäßig verteilte Schrauben, an seiner äußeren Peripherie am Lagerschild 66 befestigt ist und das mit seinem radial inneren Teil 94 gegen den Außenring 70 anliegt und diesen nach links gegen die Schulter 67 presst. (Die Ausnehmung 68 ist etwas kürzer als der Außenring 70.)

Die Schraube 82 ist hier eine Senkkopfschraube mit einem Innensechskant 83. Das Formstück 80 besteht aus einem nicht ferromagnetischen Werkstoff, bevorzugt Messing. Es hat eine zylindrische Ausnehmung 100, deren Boden mit 102 bezeichnet ist und der etwa mit der in Fig. 2 oberen Seite 104 der Senkkopfschraube 82 fluchtet oder etwas höher liegt als diese. Wie dargestellt, hat das Formstück 80 eine zum Kopf 81 komplementäre Ausnehmung 106, so dass sich eine gedrungene Bauweise ergibt.

Nachdem das Formstück 80 mit der Schraube 82 am Wellenende 44 befestigt worden ist, wird in der zylindrischen Ausnehmung 100 ein Steuermagnet 110 befestigt, z.B. durch Kleben. (Fig. 2 zeigt den Steuermagneten vor der Befestigung, Fig. 1 danach.) Der Steuermagnet 110 ist auf seiner in Fig. 2 oberen Seite 111 mit einem Magnetisierungsmuster versehen. Sein Nutzfluss ist in Fig. 2 mit 113, sein Streufluss mit 115 bezeichnet. Der Nutzfluss 113 dient zur Steuerung von magnetoresistiven Widerständen 112, die an einem Gehäusedeckel 117 auf der B-Seite des Motors 22 angeordnet und in Fig. 1 schematisch angedeutet sind, und die zur Erfassung der Drehstellung des Rotors 36 dienen, um die Kommutierung der Ströme im Stator 28 exakt zu steuern. Die Kommutierung mittels solcher durch einen Steuermagneten 110 gesteuerten Rotorstellungssensoren 112 ist dem Fachmann in vielerlei Varianten bekannt und bedarf daher keiner näheren Erläuterung. Das Magnetisierungsmuster auf der Seite 111 des Steuermagneten 110 wird bevorzugt erst erzeugt, nachdem der Steuermagnet 110 in der Ausnehmung 100 befestigt worden ist, und dies geschieht bevorzugt gleichzeitig mit der Magnetisierung der Dauermagnete 38 des Rotors 36.

Dadurch, dass das Formstück 80 aus einem nicht ferromagnetischen Werkstoff hergestellt wird, bewirkt es keine wesentliche Schwächung des Steuermagneten 110, so dass man auch mit einem kleinen Steuermagneten 110 einen genügend starken Nutzfluss 113 erhält. Die Verwendung magnetoresistiver Widerstände 112 ist bei dieser Bauweise vorteilhaft, weil solche Widerstände auch durch magnetische Felder 113 steuerbar sind, die schräg zu den Widerständen 112 verlaufen. Diese Bauweise eignet sich deshalb besonders gut für hochtourige Motoren und ist auch unempfindlich gegen axiale Stöße, die im Betrieb auf die Welle 40 wirken können. Jedoch ist die Verwendung anderer Arten von Rotorstellungssensoren nicht ausgeschlossen, z.B. von Hallgeneratoren oder optischen Sensoren.

Die Bauweise mit dem Formstück 80 und der Senkkopfschraube 82 hat sich deshalb als vorteilhaft erwiesen, weil man eine Schraube 82 aus ferromagnetischem Material verwenden kann, welche in diesem Fall als Teil des magnetischen Kreises des Steuermagneten 110 wirkt und dessen Nutzfluss 113 verstärkt. Die Verwendung eines Schraubenkopfs 81 mit Innensechskant 83 ist deshalb vorteilhaft, weil sich eine symmetrische Form des magnetischen Kreises für den Steuermagneten 110 und dadurch eine sehr exakte Kommutierung der Ströme im Stator 28 ergibt, was besonders bei hohen Drehzahlen sehr wichtig ist, um eine möglichst hohe Motorleistung zu erhalten.

Naturgemäß sind im Rahmen der vorliegenden Ansprüchen vielfache Abwandlungen und Modifikationen möglich.

## Patentansprüche

1. Elektronisch kommutierter Motor (20), welcher aufweist:
Einen Außenstator (28);
ein auf der Abtriebsseite des Motors (20) vorgesehenes A-Lagerschild (26); ein auf der gegenüberliegenden Seite des Motors (20) vorgesehenes B-Lagerschild (66);
einen im Außenstator (28) drehbar angeordneten Permanentmagnetrotor (36);
eine dem Permanentmagnetrotor (36) zugeordnete Welle (40), welche mit einer Schulter (78) versehen ist und welche an ihrem Abtriebsende (42) mittels eines im A-Lagerschild (26) angeordneten Wälzlagers (54) und an ihrem anderen Wellenende (44) mittels eines im B-Lagerschild (66) angeordneten Wälzlagers (72) drehbar gelagert ist,
wobei das Wälzlager (54) im A-Lagerschild (26) bevorzugt so angeordnet ist, dass es eine kleine radiale Verschiebbarkeit des Abtriebsendes (42) relativ zu diesem Lagerschild (26) ermöglicht;
ein am B-Lagerschild (66) befestigtes Spannglied (90, 94), mittels dessen der Außenring (70) des dortigen Wälzlagers (72) zwischen diesem Spannglied und einer Schulter (67) des B-Lagerschilds (66) eingespannt ist; ein Formstück (80) aus einem nicht ferromagnetischen Werkstoff;
und eine in eine Gewindebohrung (84) des anderen Wellenendes (44) eingeschraubte Senkkopfschraube (82), welche über dieses Formstück (80) den Innenring (74) des im B-Lagerschild (66) vorgesehenen Wälzlagers (72) gegen die Schulter (78) der Welle (40) presst.

2. Motor nach Anspruch 1, bei welchem das Formstück (80) aus einem nicht ferromagnetischen Werkstoff mit einer Ausnehmung (100, 102) versehen ist, in welcher ein Steuermagnet (110) für die Steuerung der Kommutierung des Motors angeordnet ist.

3. Motor nach Anspruch 1 oder 2, bei welchem der Kopf (81) der Senkkopfschraube (82) zu seiner Betätigung mit einem Innensechskant (83) versehen ist.

4. Motor nach Anspruch 2 und 3, bei welchem der Kopf (81) der Senkkopfschraube (83) einen Teil des magnetischen Kreises des Steuermagneten (110) bildet.

5. Motor nach einem der Ansprüche 1 bis 4, bei welchem etwa in axialer Fortsetzung der Welle (40), und dem Steuermagneten (110) gegenüberliegend, ein galvanomagnetischer Sensor (112) mit mindestens einem vom Magnetfeld (113) des Steuermagneten (110) steuerbaren magnetoresistiven Widerstand angeordnet ist.

6. Motor nach einem der vorhergehenden Ansprüche, bei welchem der Außenring (70) des Wälzlagers (72) im B-Lagerschild (66) etwas länger ist als eine ihn aufnehmende Ausnehmung (68) im B-Lagerschild (66), und das am B-Lagerschild (66) befestigte Spannglied als im wesentlichen flaches Metallteil (90) ausgebildet ist, welches mit seiner inneren Peripherie (94) gegen diesen Außenring (70) anliegt und im Bereich seiner äußeren Peripherie mittels Schrauben (92) am B-Lagerschild (66) befestigt ist.

7. Motor nach einem der vorhergehenden Ansprüche, bei welchem das im B-Lagerschild (66) angeordnete Wälzlager (72) so ausgebildet ist, dass es eine kardanische Beweglichkeit der in ihm gelagerten Welle (40) ermöglicht.

## Claims

1. Electronically commutated motor (20) which comprises: an external stator (28);
an A end shield (26) provided on the drive output side of the motor (20);
a B end shield (66) provided on the opposite side of the motor (20);
a permanent magnet rotor (36) arranged rotatably in the external stator (28);
a shaft (40) which is associated with the permanent magnet rotor (36), is provided with a shoulder (78) and is mounted rotatably at its drive output end (42) by means of a roller bearing (54) arranged in the A end shield (26) and at its other shaft end (44) by means of a roller bearing (72) arranged in the B end shield (66), the roller bearing (54) in the A end shield (26) preferably being so arranged that it allows a small radial displaceability of the drive output end (42) relative to this end shield (26);
a clamping element (90, 94) which is fastened to the B end shield (66) and by means of which the external ring (70) of the roller bearing (72) located there is clamped between this clamping element and a shoulder (67) of the B end shield (66);
a moulding (80) made of a non-ferromagnetic material;
and a socket head screw (82) which is screwed into a threaded bore (84) of the other shaft end (44) and presses the internal ring (74) of the roller bearing (72) provided in the B end shield (66) against the shoulder (78) of the shaft (40) through this moulding (80).

2. Motor according to claim 1, in which the moulding (80) made of a non-ferromagnetic material is provided with a recess (100, 102) in which a control magnet (110) for controlling the commutation of the motor is arranged.

3. Motor according to claim 1 or 2, in which the head (81) of the socket head screw (82) is provided with a hexagon socket (83) for its operation.

4. Motor according to claim 2 and 3, in which the head (81) of the socket head screw (83) forms a part of the magnetic circuit of the control magnet (110).

5. Motor according to one of claims 1 to 4, in which a galvanomagnetic sensor (112) with at least one magnetoresistive resistor controllable by the magnetic field (113) of the control magnet (110) is arranged roughly in the axial extension of the shaft (40), lying opposite the control magnet (110).

6. Motor according to one of the preceding claims, in which the external ring (70) of the roller bearing (72) in the B end shield (66) is somewhat longer than a recess (68) receiving it in the B end shield (66), and the clamping element fastened to the B end shield (66) is embodied as an essentially flat metal part (90) which bears with its inner periphery (94) against this external ring (70) and in the area of its outer periphery is fastened to the B end shield (66) by means of screws (92).

7. Motor according to one of the preceding claims, in which the roller bearing (72) arranged in the B end shield (66) is embodied so that it allows cardanic mobility of the shaft (40) mounted in it.

## Revendications

1. Moteur à commutation électronique (20), lequel présente :
un stator extérieur (28) ;
un flasque A (26) prévu du côté sortie du moteur (20) ;
un flasque B (66) prévu du côté opposé du moteur (20) ;
un rotor à aimant permanent (36) monté de manière à pouvoir tourner dans le stator extérieur (28) ;
un arbre (40) associé au rotor à aimant permanent (36), lequel est muni d'un épaulement (78) et est monté de manière à pouvoir tourner à son extrémité de sortie (42) au moyen d'un palier à roulement (54) disposé dans le flasque A (26) et à son autre extrémité d'arbre (44) au moyen d'un palier à roulement (72) disposé dans le flasque B (66),
le palier à roulement (54) étant de préférence disposé dans le flasque A (26) de manière à permettre une petite mobilité radiale de l'extrémité de sortie (42) par rapport à ce flasque (26) ;
un élément de serrage (90, 94) fixé sur le flasque B (66), au moyen duquel la bague extérieure (70) du palier à roulement (72) de cet endroit est serrée entre cet élément de serrage et un épaulement (67) du flasque B (66) ;
une pièce moulée (80) en matériau non ferromagnétique ;
et une vis à tête fraisée (82) vissée dans un trou fileté (84) de l'autre extrémité d'arbre (44), laquelle presse par l'intermédiaire de cette pièce moulée (80) la bague intérieure (74) du palier à roulement (72) prévu dans le flasque B (66) contre l'épaulement (78) de l'arbre (40).

2. Moteur selon la revendication 1, dans lequel la pièce moulée (80) en matériau non ferromagnétique est munie d'un évidement (100, 102) dans lequel est disposé un aimant de commande (110) pour la commande de la commutation du moteur.

3. Moteur selon la revendication 1 ou 2, dans lequel la tête (81) de la vis à tête fraisée (82) est munie d'un six pans creux (83) pour son actionnement.

4. Moteur selon les revendications 2 et 3, dans lequel la tête (81) de la vis à tête fraisée (82) forme une partie du circuit magnétique de l'aimant de commande (110).

5. Moteur selon l'une des revendications 1 à 4, dans lequel un capteur galvanomagnétique (112) avec au moins une résistance magnétorésistive commandable par le champ magnétique (113) de l'aimant de commande (110) est disposé à peu près dans le prolongement axial de l'arbre (40) et en face de l'aimant de commande (110).

6. Moteur selon l'une des revendications précédentes, dans lequel la bague extérieure (70) du palier à roulement (72) dans le flasque B (66) est légèrement plus longue qu'un évidement (68) dans le flasque B (66) dans lequel elle est logée et l'élément de serrage fixé sur le flasque B (66) est formé comme une pièce métallique essentiellement plate (90) qui repose contre cette bague extérieure (70) par sa périphérie intérieure (94) et est fixée sur le flasque B (66) au moyen de vis (92) au niveau de sa périphérie extérieure.

7. Moteur selon l'une des revendications précédentes, dans lequel le palier à roulement (72) disposé dans le flasque B (66) est formé de manière à permettre une mobilité à la Cardan de l'arbre (40) qui est monté dedans.
